# EUROPÄISCHE PATENTANMELDUNG

(11) **EP 3 032 067 A1**
(43) Veröffentlichungstag der Anmeldung: **15.06.2016**
(21) Anmeldenummer: 15003190.4
(22) Anmeldetag: 06.11.2015
(51) Int. Cl.: F02B 43/08

(54) **GASMISCHER EINES VERBRENNUNGSMOTORS EINES BHKW FÜR DEN BETRIEB MIT EINEM HOLZGAS**

(30) Priorität: 14.11.2014 DE 102014016855
(71) Anmelder: Joos, Melchior, 88285 Bodnegg (DE); Joos, Bernd, 88285 Bodnegg (DE)
(72) Erfinder: Joos, Melchior, 88285 Bodnegg (DE); Joos, Bernd, 88285 Bodnegg (DE)
(74) Vertreter: Riebling, Peter

(57) **Zusammenfassung**

Vorrichtung zur Erzeugung eines brennbaren Gasgemisches aus einem kohlenstoffhaltigen Ausgangsstoff, insbesondere aus stückigem Holz, mit einem Reaktor (2), wobei der Reaktor (2) wenigstens eine Oxidationszone (7) zur Oxidation des Ausgangsstoffes und eine Reduktionszone (8) zur Reduktion wenigstens eines Zwischenprodukts der Oxidation umfasst, wobei ein Verdichter (15) für die Aufladung eines Verbrennungsmotors (34) als Teil eines BHKW (60) und mit einem Gasmischer (21), wobei der Verdichter (15) mindestens ein in einem Gehäuse (38) drehbar angetriebenes Verdichterrad (25) aufweist, wobei dem Verdichterrad (25) ein Mischer vorgeschaltet ist welcher über einen ersten Einlass (58) einen Luftstrom (41) aus der Atmosphäre und über einen zweiten Einlass (46) einen Gasstrom (24) aus dem Gaserzeuger (2) ansaugt, wobei zur Zentrierung des Gasstroms (24) auf den Mittenbereich des Verdichterrades (25) der Gasstrom von dem Luftstrom (41) etwa schlauchförmig umhüllt ist.

## Beschreibung

Die Erfindung betrifft einen Gasmischer für die Mischung von Luft und Holzgas eines Verbrennungsmotors eines Blockheizkraftwerkes (BHKW) für den Betrieb mit einem Holzgas nach dem Oberbegriff des Patentanspruches 1, sowie ein BHKW unter Verwendung eines Verdichters und einen Gasmischer.

Die Erfindung ist nicht auf Kraftwärmekopplungen aus mit der Erzeugung eines Holzgases aus einem stückigem Gut, wie z. B. Holz beschränkt, sondern das Holzgas kann im Sinne der vorliegenden Erfindung auch durch andere, kohlenstoffhaltige Biomasse-Stoffe erzeugt werden, wie z. B. Holz-Pellets, Rindenerzeugnisse, Klärschlamm, Stroh und andere brennbare Biomasse-Stoffe.

Der hier verwendete Begriff "Holzgas" ist deshalb weit zu verstehen, weil alle oben genannten Stoffe vergast werden können. Er wird deshalb nur der einfacheren Beschreibung wegen verwendet und ist nicht auf die Wortbedeutung "Holzgas" beschränkt.

### Stand der Technik:

Kraftwärmekopplungen mit der Gaserzeugung aus einem kohlenstoffhaltigen Ausgangsstoff insbesondere Holz, werden der Einfachheit halber häufig mit einem frei saugenden Gasmotor als Wärmekraftmaschine ausgestattet.

Durch die stetig steigenden Anforderungen bezüglich Wirtschaftlichkeit und Effizienz wird vermehrt auf die im KFZ und anderen Anwendungen bereits lange erprobte und erfolgreiche Verwendung einer zusätzlichen Motoraufladung zurückgegriffen.

Hierbei wird einem Gasmotor, welcher frei saugend maximal den Umgebungsdruck zum Einbringen des Gas-Luft Gemisches in den Zylinder zur Verfügung hat, unter Verwendung einer mechanischen Vorrichtung ein höherer Druck als der Umgebungsdruck bereitgestellt. Dadurch steigt die Füllmenge des Motors.

Die Erfindung hat sich die Aufgabe gemacht den Wirkungsgrad, Verschleiß und Störanfälligkeit eines BHKW mit Aufladung wesentlich zu verbessern.

Zur Lösung der gestellten Aufgabe ist die Erfindung durch die technische Lehre des Anspruches 1 gekennzeichnet.

Erfindungsgemäß wird vorgeschlagen, bei einem BHKW eine Aufladung mittels eines Verdichters und Gasmischers zu verwenden, die mit wesentlich höherem Wirkungsgrad arbeitet und über eine längere Betriebszeit störungsfrei und betriebssicher ist. Der Verdichter kann ein- oder mehrstufig ausgebildet sein. Der einfacheren Beschreibung wird von einem einstufigen Verdichter ausgegangen, obwohl die Erfindung auch mehrstufige Verdichter umfasst.

Die dabei erzielten Vorteile sind neben der Reduktion von spezifischem Reibverlust des Gasmotors, der verbesserte thermodynamische Wirkungsgrad, ein verbessertes Emissionsverhalten, die Möglichkeiten zur Leistungsregelung, Steigerung der Leistung und weiteres mehr.

Vorzugsweise besteht die Vorrichtung zur Motoraufladung aus einem Radialverdichter/Zentrifugalverdichter, welcher unter anderem beim Turbolader bei Kfz-Motoren zum Einsatz kommt. Weitere Möglichkeiten zur Motoraufladung sind Schraubenkompressoren, Axialverdichter, Kolbenverdichter, Lamellenverdichter und dergleichen.

Der Antrieb des Radialverdichters erfolgt vorzugsweise, wie z.B. beim Turbolader üblich, über eine Welle mit einer Turbine über den Abgasdruck des Gasmotors. Weitere Ausführungen zum Antrieb sind elektrische Motoren, Drehenergie der Kurbelwelle des Gasmotors oder dergleichen.

Im Bereich der Vergasung eines kohlestoffhaltigen Ausgangsstoffes insbesondere Holz und der Zubringung des Gases zu einem Gasmotor ist die Gasqualität von maßgeblicher Bedeutung.

Negativ wirkende Bestandteile des erzeugten Gases, die hinsichtlich der nachfolgenden Umsetzung seine Qualität verschlechtern sind unter anderem, Wasser, Partikel (z.B. Staub, Kohle, Schlacke), Teere, Öle.

Diese Bestandteile begrenzen die Lebensdauer und Wirtschaftlichkeit der Kombination von Gasmotor mit Radialverdichter zur Motoraufladung und beeinträchtigen die Lebensdauer, Wirtschaftlichkeit und Effizienz einer solchen Kombination.
Einer Gasreinigung zum Betrieb einer Kraftwärmekopplung mit einem Holzgas kommt dementsprechend große Bedeutung zu.

Eine vollständige Reinigung aller negativen Bestandteile des Gases ist mit großem Aufwand verbunden und erfordert meist ein mehrstufiges Reinigungssystem aus Gaswäschern und/oder Filtersystemen oder/und dergleichen.

Bei Kraftwärmekopplungen bis 500KW elektrische Leistung wird um die Herstellungs- und Betriebskosten gering zu halten meist lediglich auf die Verwendung eines Tuchfilters zurückgegriffen.
Eine vollständige Reinigung des Gases von allen nachteiligen Bestandteilen ist demnach hier wirtschaftlich nicht sinnvoll.

Üblicherweise wird das vom Gaserzeuger erzeugte Gas etwa 5-5000cm vor dem Eintritt eines Radialverdichters des Gasmotors mit Umgebungsluft angemischt um ein zündfähiges Gasgemisch zu erhalten.

Hierbei kondensiert auch der - falls vorhandene - Wasserdampf durch das Temperaturgefälle.

Das Wasser bildet nun Tropfen unterschiedlicher Größe und bewegt sich im Luft-Gasgemisch mitsamt den anderen noch verbleibenden nachteilig wirkenden Gasbestandteilen zum Verdichter.

Die Funktion eines Radialverdichters setzt eine relativ hohe Umfangsgeschwindigkeit des Verdichterrades um die eigene Achse voraus. Diese kann im Bereich von etwa 100-700m/s am äußersten Punkt liegen.
Tritt nun das Gasgemisch mitsamt seinen festen oder/und flüssigen Bestandteilen in das Verdichterrad ein, kommt es zwangsläufig zu Aufschlägen des Wassers, Staub usw. mit dem sich schnell bewegten Verdichterrad. Diese Aufschläge können so stark sein, dass ein Materialabtrag des Rades erfolgt bzw. Teile des Rades durch Erosion beschädigt und abgelöst werden. Bei Verdichtern im Kfz-Bereich ist dieses Phänomen auch als Tropfen- oder Partikelschlag bekannt. Das dort zu Verdichtende Medium ist jedoch im Hinblick auf seine Partikel-Freiheit nicht mit dem einer Holzgas-Kraftwärmekopplung zu vergleichen.

Mit steigender Leistung bzw. Verdichtungsverhältnisses des Radialverdichters steigen tendenziell auch die Umfangsgeschwindigkeit und Verschleiß durch Aufschläge.

Diese Beschädigungen führen zuerst zu verringerten Wirkungsgraden und Leistung des Verdichters und schlussendlich zum Totalausfall bzw. Defekt.

Um den langfristigen verschleißfreien/armen Betrieb eines Radialverdichters am Gasmotor unter der Verwendung von Gas aus kohlestoffhaltigem Ausgangsstoff zu ermöglichen wird ein erfindungsgemäßer Gasmischer dem Radialverdichter vorgeschaltet.

Durch das Zueinanderführen von Gas und Luft bzw. der Gemischbildung unmittelbar vor (2-40mm) und oder im Verdichterrad entstehen mehrere Vorteile:
1. Die durch das Temperaturgefälle kondensierenden Wassermoleküle können aufgrund der erst unmittelbar vor und/oder im Verdichter stattfindenden Gemischbildung keine dem Verdichter gefährliche Größe/Masse bzw. Tropfenform annehmen.
2. Dadurch kann bei Zuführen des Holzgases mit einer Temperatur welche oberhalb der Sättigungsgrenze für das enthaltene Wasser liegt, Tropfenschlag durch Wasser komplett vermieden werden.
3. Die erst im Radialverdichter stattfindende Kondensation und die Entstehung kleinster Wasserpartikel können in vorteilhafter Weise den Verdichter vor Ablagerungen durch Teer schützen oder ggf. reinigen ohne Material des Verdichterrades zu beschädigen.
4. Ein weitere Vorteil der Erfindung besteht in der Tatsache, dass die noch enthaltenen, nachteilig wirkenden Begleitstoffe, wie nicht gasförmiges Wasser, Partikel, Teere, Öle oder dergleichen, in einem Punkt zentral zur Drehachse des Radialverdichters auf das Verdichterrad auftreffen und somit den Bereich der niedrigsten Aufprallgeschwindigkeit nutzen.

Die Auftreffgeschwindigkeit der für den Verdichter schädlichen Begleitstoffe kann somit im Bereich von 30-70% reduziert werden. Hierdurch wird ein Verschleiß am Verdichter stark vermindert oder sogar vollständig vermieden.

Des Weiteren wird bei der zentralen bzw. mittigen Einbringung unmittelbar vor dem Verdichterrad das Verdichterghäuse vor Ablagerungen durch Teere oder ähnliche klebenden und abrasiven Stoffe geschützt. Die Wahrscheinlichkeit auf ein Lösen von Verkrustungen, die Schäden am Verdichterrad zur Folge haben können, wird wirkungsvoll reduziert.

Es hat sich gezeigt das die Verwendung der Merkmale dieser Erfindung den Verschleiß am Radialverdichter mit mittlerem Ladedruck bei konstanter Gasqualität um bis das 20-fache verringern kann.

Wirkungsgradverluste, Austausch oder kostenintensiven Reparatur am Verdichter bzw. der Motoraufladung entfallen was sich hinsichtlich der Wirtschaftlichkeit von großem Vorteil herausgestellt hat.

In besonderer Ausführung kann das Gas auch nach dem Radialverdichter vor dem Gasmotor zugeführt werden, hierzu muss das Gas mit Druck ∼ Ladedruck Radialverdichter > Umgebungsdruck eingebracht werden, dies kann über einen weiteren Verdichter erfolgen oder aber über denselben Verdichter mit ggf. nachgeordneter Drosselstelle wenn dieser bereits den Reaktor zur Gaserzeugung mit Druck beaufschlagt.

In einer besonderen Ausführung werden für das Material des Verdichterrades Edelstahllegierungen oder Titanlegierungen oder sehr harte und/oder zähe Werkstoffe gewählt, um den Verschleiß durch aufprallende Partikel zu vermindern.

Merkmal der vorliegenden Erfindung ist demnach, dass dem Verdichter nunmehr ein erfindungsgemäßer Gasmischer vorgeschaltet ist, der im Wesentlichen aus einem umgebenden Gehäuse zur Führung eines nichtbrennbaren und annähernd partikel- und teerfreien Luftstromes besteht, wobei koaxial im Gehäuse ein Düsenrohr angeordnet ist, so dass sich zwischen dem Außenumfang des Düsenrohrs und dem Innenumfang des Gehäuses ein Ringraum bildet, über den der Luftstrom zugeführt wird. Der Luftstrom strömt am Außenumfang des Düsenrohrs entlang und im Innenraum des Düsenrohrs strömt der partikel- und teerbehaftete Gasstrom, der im Bereich einer am Düsenrohr vorderseitig angeordneten Düsenmündung gegen den Mittenbereich des Verdichterrades gerichtet ist, wobei der Gasstrom von dem am Außenumfang des Gasstromes geführten Luftstrom umhüllt ist und durch diesen auf die mittlere Drehachse des Verdichterrades zentriert wird.

Mit der gegebenen technischen Lehre ergibt sich der Vorteil, dass nunmehr der Gasstrom, der möglicherweise mit Partikeln, Staub und anderen Fremdstoffen verunreinigt ist, zentrisch auf den mit relativ niedriger Umdrehungsgeschwindigkeit drehenden, zentralen inneren Bereich des Verdichterrades auftrifft, und dort nur wenig Schaden anrichten kann, weil der gereinigte und annähernd partikelfreie Luftstrom den möglicherweise verunreinigten Gasstrom an seinem Außenumfang vollständig ummantelt und wie ein virtuelles Rohr gegen das Zentrum des Verdichterrades zuführt.

Das hat den Vorteil, dass die Gefahr von Erosion durch mit hoher Geschwindigkeit auftreffende Partikeln, wie es im Außenbereich des Verdichterrades der Fall sein würde, vermieden wird.

Damit wird nun erstmals, bei größtmöglicher Schonung des Verdichterrades, der mit Partikeln und anderen Fremdstoffen verunreinigte Gasstrom auf den sich mit langsamer Geschwindigkeit bewegenden zentrischen Teil des Verdichterrades geleitet. Das Drehzentrum ist durch die Verdichterwelle bzw. Verdichtermutter gebildet und gegen diesen Bereich wird der mit einem reinen Luftstrom ummantelte Gasstrom zugeführt. Damit wird vermieden, dass der mit Partikeln verunreinigte Gasstrom auf die mit größerer Umfangsgeschwindigkeit umlaufenden äußeren Teile des Verdichterrades auftrifft, weil er von einem gereinigten, partikelfreien Luftstrom ummantelt und zentriert wird.

Der den verunreinigenden Gasstrom umhüllende Luftstrom wirkt demnach bis zu einem gewissen Grad als luftgestützte, schlauchförmige Leitvorrichtung, die den Gasstrom auf die Mitte des Verdichterrades zentriert.

In einer Weiterbildung der Erfindung kann es vorgesehen sein, dass im Bereich des äußeren Ringraumes des Gasmischers, in dem der Luftstrom in Richtung zur Düsenmündung des Gasmischers geführt wird, noch zusätzliche Leitschaufeln angebracht sind.

Diese Leitschaufeln können den Luftstrom in Strömungsrichtung begradigen, um einen laminaren Luftstrom zu erreichen, der den verunreinigten Gasstrom ummantelt.

In einer anderen Ausgestaltung der Erfindung kann es jedoch auch vorgesehen sein, dass die Leitschaufeln schräg ausgerichtet sind, um einen in sich drehenden Luftstrom zu erzeugen, der den im Mittenbereich geführten Gastrom in einer drehenden Bewegung ummantelt und schraubenförmig mit sich führt.

In einer ersten Ausgestaltung der vorliegenden Erfindung ist vorgesehen, dass der kurz vor der Düsenmündung befindliche Abschnitt des Düsenrohrs zylindrisch ausgebildet ist, d. h. er ist in axialer Richtung geradlinig mit gleichem Durchmesser ausgebildet.

In einer zweiten Ausführungsform der Erfindung kann es vorgesehen sein, dass dieser Abschnitt, der vor der Düsenmündung des Düsenrohres den Partikelbehafteten Gasstrom führt, zusätzlich im Sinne einer Verengung konusförmig verengt ist und somit eine sich verengende Düsenmündung bildet.

In einer anderen Ausgestaltung der Erfindung ist vorgesehen, dass im Innenraum des Düsenrohrs noch zusätzliche Leitschaufeln angeordnet sind, die entweder für eine laminare Strömung und für eine zusätzliche Zentrierung des Partikel- behafteten Gasstromes auf den Mittenbereich des Verdichterrades sorgen.

In einer anderen Ausgestaltung können diese Leitschaufeln jedoch auch angeschrägt sein, um einen rotierenden Gasstrom zu erzeugen, der zentrisch auf dem Mittenbereich des Verdichterrades gerichtet ist.

Alle vorher beschriebenen Anordnungen von Leitschaufeln für die Führung des äußeren Luftstroms (gerade oder angeschrägte Leitschaufeln) können mit jeder beliebigen anderen Art von Leitschaufeln für die Führung des Partikelbehafteten Gasstroms untereinander kombiniert werden.

Versuche des Anmelders haben gezeigt, dass die Mischung von Luft und Holzgas beim erfindungsgemäßen Einbringen in das Verdichterrad eine sehr homogene Mischung nach dem Verdichter hervorbringt, diese Homogenität ist anderen Gas-Luftmischern bei weitem überlegen. Demzufolge wird die Zündung des Luft-Holzgasgemisches im Gasmotor erleichter. Was wiederum die Leistung, Wirkungsgrade und Emissionsverhalten der Wärmekraftmaschine verbessert.

Die Erfindung ist im Übrigen völlig frei in der Wahl des Verbrennungsmotors, dem das erfindungsgemäß aufbereitete Gas-Luftgemisch zugeführt wird.

Er kann als Kolben-Verbrennungsmaschine, als Drehkolben-Verbrennungsmaschine oder in jeder anderen beliebigen Art eines Verbrennungsmotors ausgebildet werden, mit dem es gelingt, ein zündfähiges Gas-Luftgemisch in eine drehende Energie umzuwandeln, um schließlich mit diesem Verbrennungsmotor einen elektrischen Generator anzutreiben und mit diesem Strom zu erzeugen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einem Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert eine Übersichtszeichnung über eine Holzgasanlage, die mit einem BHKW verbunden ist
- Figur 2:: schematisiert einen Querschnitt durch einen, einem Verdichter vorgeschalteten Gasmischer nach der Erfindung
- Figur 3:: eine gegenüber Figur 2 vervollständigte und weitere Merkmale aufweisende Darstellung des Gasmischers
- Figur 4:: ein Schnitt gemäß der Linie IV-IV in Figur 2

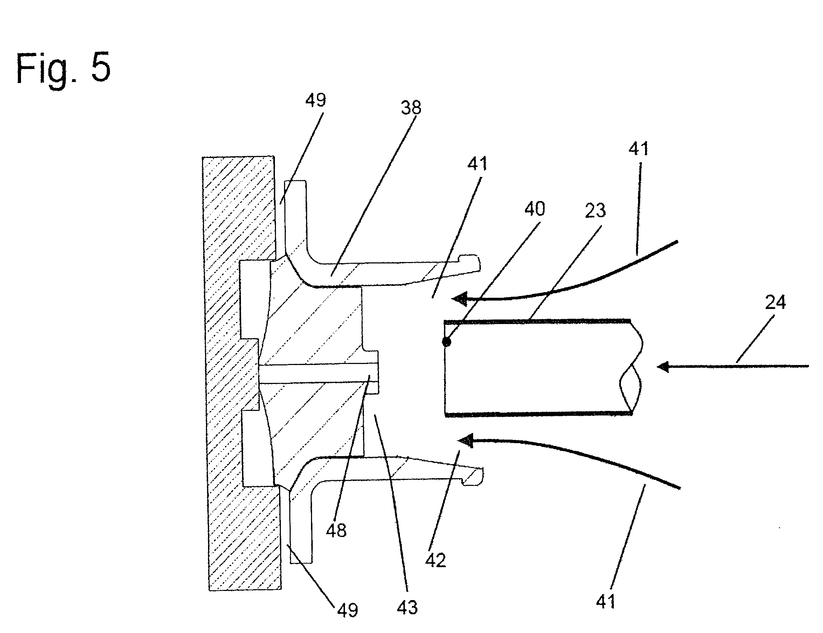

- Figur 5:: eine gegenüber Figur 2 noch ergänzte Darstellung der Einzelteile.
- Figur 6: eine weitere Darstellung nach Figur 5, die weitere Einzelheiten der Gasmischung darstellt

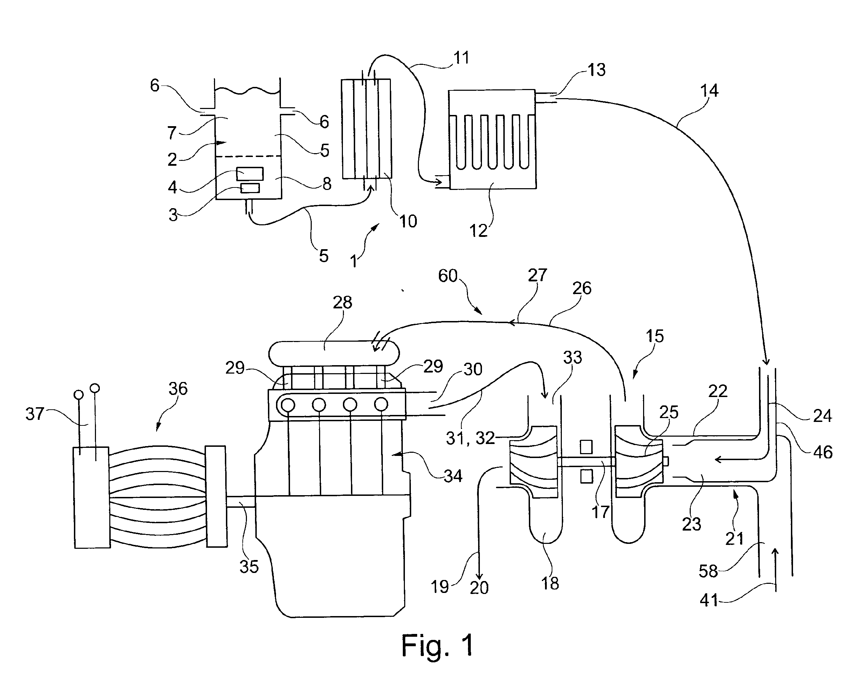

Im oberen Bereich der Figur 1 ist schematisiert eine Holzgas-Anlage 1 dargestellt, die im Wesentlichen aus einem Gaserzeuger 2 besteht, der durch einen Reaktor gebildet ist, der aus einem Gehäuse besteht, in dessen oberen Bereich Lufteinbringungen 6 angeordnet sind. Im Reaktor findet eine Verbrennung unter Ausbildung einer oberen Oxidationszone 7 und einer unteren Reduktionszone 8 statt. Eine solche Holzgas-Anlage ist zum Beispiel in der EP1436364B1 des gleichen Anmelders beschrieben, deren Offenbarung vollinhaltlich von der Offenbarung dieser Erfindung umfasst sein soll.

In dem dort beschriebenen Reaktor werden in an sich bekannter Weise Biomasse- Stoffe verbrannt, wie z. B. Holzstücke, Pellets und andere Stoffe, wie in der allgemeinen Beschreibungseinleitung angegeben.

Im unteren Bereich des Reaktors ist ein Rost angeordnet, der im gezeigten Ausführungsbeispiel aus zwei drehend angetriebenen Rostscheiben 3, 4 besteht, die im Glutbett 5 arbeiten.

Das in diesem Gaserzeuger 2 erzeugte brennfähige Gas wird über eine Leitung 9 einem nach geschalteten Gaskühler 10 zugeführt und an dessen Ausgang über eine Leitung 11 einem Filter 12 zugeführt.

Der Filter 12 scheidet den größten Teil von schädlichen Partikeln aus dem Gasstrom aus und der Ausgang 13 des Filters 12 ist über eine Leitung 14 mit dem Eingang des BHKW 60 verbunden.

Die BHKW-Anlage 60 besteht aus einem Gasmischer 21, in dem die erfindungsgemäße Mischung eines aus der Atmosphäre angesaugten Luftstroms 41 mit dem zündfähigen Gasstrom 24 aus dem Gaserzeuger 2 erfolgt, der Verdichter 25 im gezeigten Ausführungsbeispiel besteht wird über eine Antriebswelle 17 von einer Turbine 18 angetrieben ist, die ihrerseits vom Abgasstrom eines Verbrennungsmotors 34 angetrieben ist.

Der Abgasstrom des Abgases 31 wird über die Leitung 32 vom Abgaskrümmer des Verbrennungsmotors 34 in den Einlass 33 der Turbine 18 eingeführt, und treibt diese drehend an, wonach dann das Abgas 20 in Pfeilrichtung 19 aus der Turbine 18 abgelassen wird.

Durch den Drehantrieb mit der Turbine 18 führt der Verdichter 25 eine Verdichtung des über den Gasmischer 21 angesaugten Gasstromes herbei.

Der Verbrennungsmotor läuft mit dem erfindungsgemäß erzeugten Gas-Luftgemisch 26 und gibt seine Drehenergie über eine Antriebswelle 35 an einen nach geschalteten Generator 36 ab, der dadurch drehend angetrieben ist, und Strom erzeugt, der am Stromausgang 37 abgenommen werden kann.

Das zündfähige Gas-Luftgemisch 26 wird in das Ansaugrohr 28 des Verbrennungsmotors 34 eingeführt und über mehrere Zylindereinlässe 29 dem Verbrennungsraum des Verbrennungsmotors 34 zugeführt.

Der erfindungsgemäße Gasmischer 21 ermöglicht eine größtmögliche Schonung des Verdichterrades 25 des Kompressors 16 und damit eine lange Laufzeit des BHKW 60.

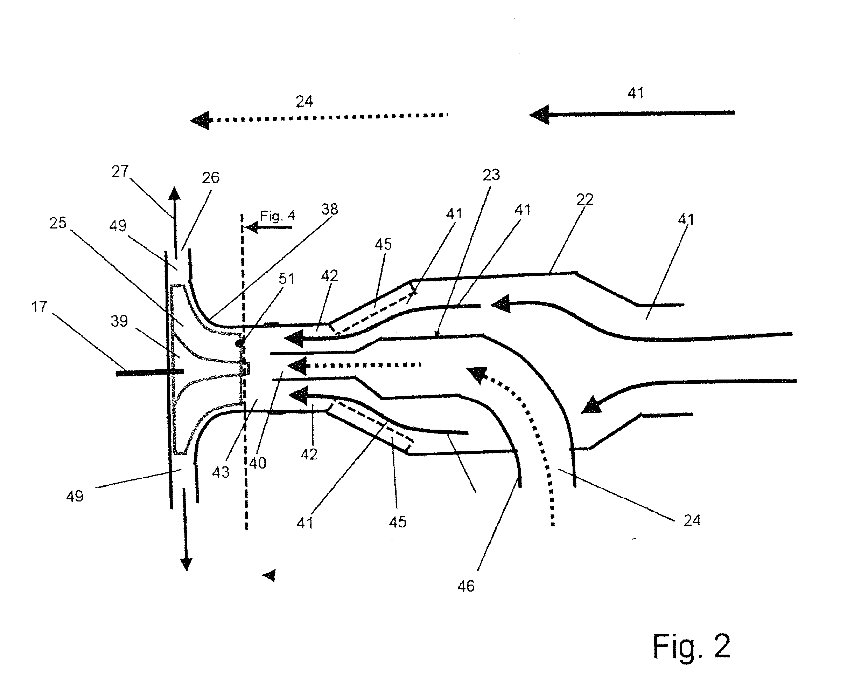

Zu diesem Zweck besteht der Gasmischer 21 gemäß Figur 2 aus einem lang gestreckten, etwa zylindrischen Gehäuse 22, das an seiner zentralen Einlassöffnung einen Luftstrom 41 von der Atmosphäre einsaugt.

Der Luftstrom 41 wird am Innenumfang des Gehäuses 22 über den Außenumfang eines koaxial im Gehäuse 22 angeordneten Düsenrohrs 23 geführt, so dass das Düsenrohr 23 allseitig an seinem Außenumfang von dem Luftstrom 41 umströmt ist.

Im Düsenrohr 23 wird der partikel- und teerbehaftete Gasstrom 24 geführt, der aus der Leitung 14 entstammt. Der Gasstrom 24 wird in koaxialer Richtung und parallel zu dem am Außenumfang entlang strömenden Luftstrom 41 im Düsenrohr 23 in Richtung auf eine Düsenmündung 40 geführt.

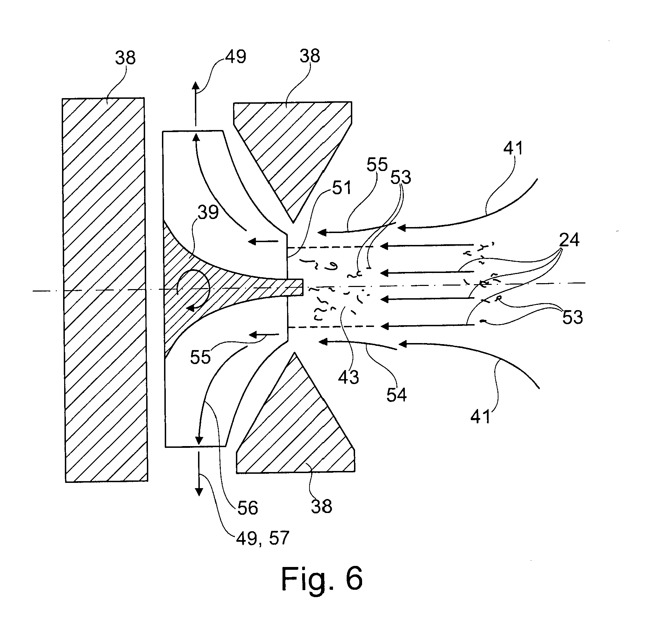

Der Luftstrom 41 ummantelt den zentrisch darin geführten Gasstrom 24 im Bereich der Düsenmündung 40 und bildet sozusagen ein luftgestütztes Rohr zur Führung des Gasstromes 24, wie es in Figur 6 dargestellt ist.

Der Luftstrom 41 strömt in Pfeilrichtung 55 und bildet eine etwa zylindrische vollumfängliche Umhüllung 54 für diesen Gastrom 24.

Damit werden (siehe Figur 6) die möglicherweise noch im Gasstrom 24 vorhandenen Partikel 53 von dem umhüllenden Luftstrom 41 umfasst und am Ausbrechen aus dem Luftstrom 41 in radialer Richtung auswärts gehindert.

Der Gasstrom 24 wird demnach durch den umhüllenden Luftstrom 41 (Umhüllung 44) zentrisch gegen den sich mit niedriger Geschwindigkeit drehenden zentralen, inneren Bereich des Verdichterrades 25 geführt, wie es in Figur 6 dargestellt ist.

Die Umhüllung 54 des Gasstromes 24 mit dem Luftstrom 41 findet in einem Mischraum 43 im Gehäuse 23 des Gasmischers statt, wobei dieser Mischraum in seiner axialen Länge kurz gehalten werden soll. Es soll dort verhindert werden, dass der Gasstrom 24 aus dem umhüllenden Luftstrom 41 ausbricht, so dass die axiale Länge des Mischraumes 43 kurz ist.

Das Verdichterrad 25 dreht sich in einem Verdichtergehäuse 38 mit sehr hoher Umfangsgeschwindigkeit (siehe allgemeiner Beschreibungsteil) und der Ringraum 42 wird bis in den Mischraum 43 in axialer Richtung fortgesetzt und mündet in diesen.

In idealer Weise wird der von dem Luftstrom 41 umhüllte Gastrom 24 als Mischstrom 59 in Richtung auf die Verdichtermutter 48 des umlaufenden Verdichterrades 25 geführt, weil dort die mit geringster Bewegungsgeschwindigkeit laufenden Teile des Verdichterrades 25 sind.

Nach dem Durchströmen des Verdichterrades, wie es in Figur 6 dargestellt ist (siehe Pfeilrichtung 55, 56, 57), verlässt der das Verdichterrad 25 verlassende Gasstrom in Pfeilrichtung 27 einen Auslassspalt 49, der zwischen dem Verdichterrad 25 und dem Gehäuse 38 gebildet ist.

Der zentrische Bereich des Verdichterrades 25 ist durch einen massiven Kern 39 gebildet, der von den Gasströmen nicht durchströmt wird.

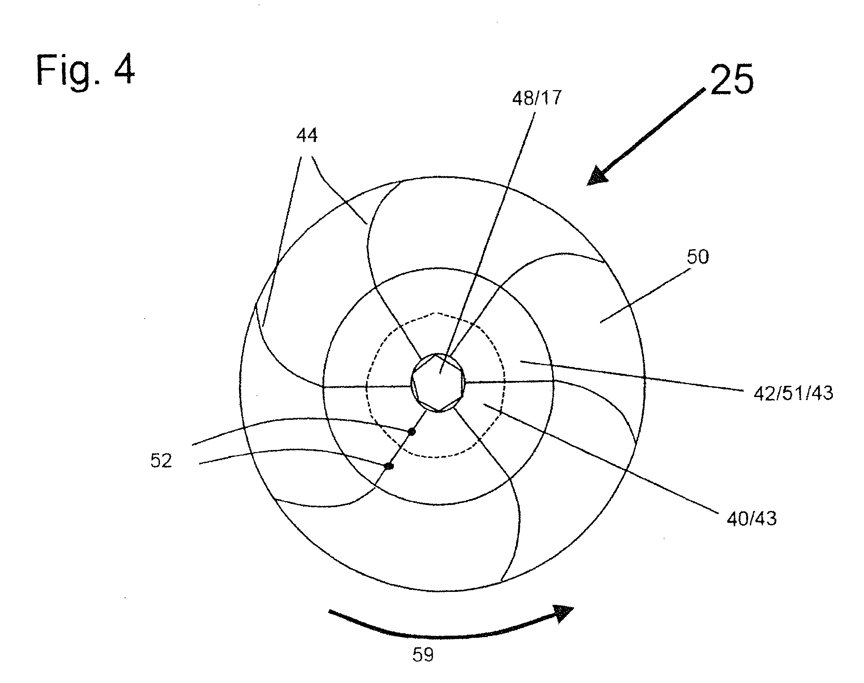

Gemäß Figur 4 ist das Verdichterrad 25 aus einer Anzahl umlaufenden Verdichterschaufeln 44 gebildet, wobei die Verdichterschaufel 44 radial einwärts jeweils Schaufeloberkanten 52 bilden, die sich in den Mischraum 43 hinein erstrecken.

In einer Weiterbildung der vorliegenden Erfindung ist in gestrichelten Linien in Figur 2 eingezeichnet, dass optional am Innenumfang des Gehäuses 22 noch in Strömungsrichtung in axialer Richtung ausgerichtete Leitschaufeln 45 gleichmäßig am Umfang verteilt angeordnet sind, die für eine laminare Luftströmung des Luftstromes 41 in Richtung auf die Düsenmündung 40 sorgen.

In einer anderen, nicht dargestellten Ausführung, können jedoch diese Leitschaufeln 45 auch angeschrägt sein, um einen rotierenden Luftstrom 41 im Bereich der Düsenmündung 40 zu erzeugen.

Es ist zeichnerisch nicht dargestellt, dass es in einer anderen Ausgestaltung der Erfindung vorgesehen sein kann, dass im Düsenrohr 23 im Bereich der Düsenmündung 40 ebenfalls Leitschaufeln - etwa wie die Leitschaufeln 45 - angeordnet sein können, die gleichmäßig am Umfang verteilt im Innenraum des Düsenrohres 23 in der Nähe der Düsenmündung 40 angeordnet sind, um entweder - nach einem ersten Ausführungsbeispiel - den Gasstrom 24 noch weiter zu begradigen und für eine laminare Gasströmung zu sorgen oder - in einer zweiten Ausführungsform - dem Gasstrom 24 eine rotierende Drehbewegung mitzugeben.

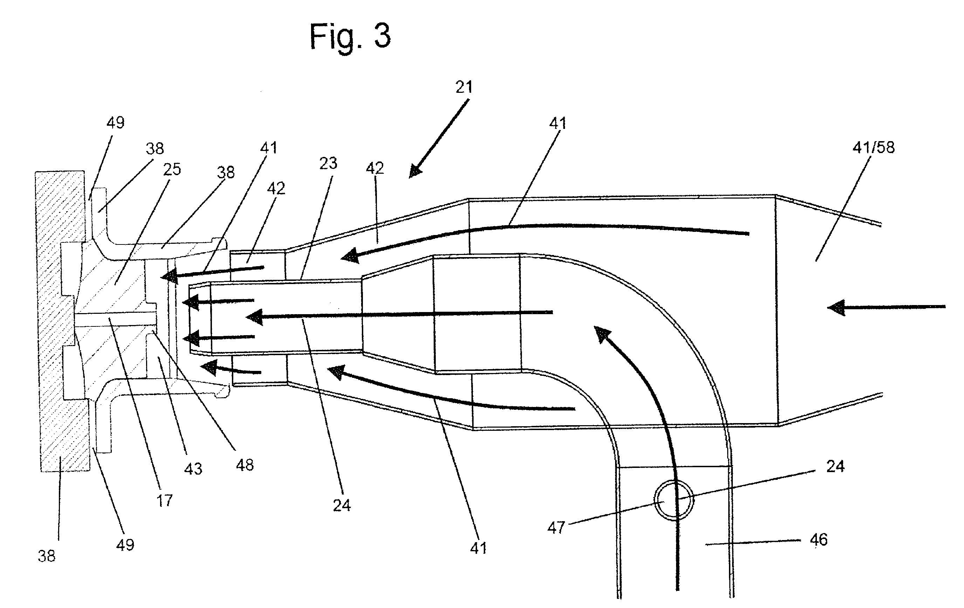

In Figur 3 sind die gleichen Teile des Gasmischers 21 mit den gleichen Bezugszeichen versehen.

Es ist noch zusätzlich dargestellt, dass am Einlass 46 für den Gasstrom 24 eine Kurbelgehäuse-Entlüftung 47 mündet, die vom Verbrennungsmotor 34 heran geführt wird.

Figur 4 zeigt, dass das Verdichterrad 25 im Wesentlichen in einen radialen Außenbereich 50 unterteilt werden kann, indem die Verdichterschaufeln 44 angeordnet sind, wobei sich radial einwärts an diesen Außenbereich 50 ein Ringraum 42 mit dem Einlassbereich 51 anschließt.

Radial einwärts zu dem Ringraum 42 ist dann die erfindungsgemäße Düsenmündung 40 angeordnet, die im Mischraum 43 angeordnet ist und über welche der Gasstrom 24 eingeleitet wird.

In einer Schnittlinie IV nach Figur 2 wäre der Außenbereich 50 nach Figur 4 jedoch nicht sichtbar. Er ist lediglich aus zeichnerischen Erläuterungsgründen noch mit dargestellt.

Die Gegenstände der Erfindung, die in den beigefügten Patentansprüchen durch unabhängige Patentansprüche gekennzeichnet sind, sollen einzeln für sich genommen und in jeder beliebigen Kombination untereinander Schutz genießen.

### Zeichnungslegende

1. Holzgas-Anlage
2. Gaserzeuger
3. Rostscheibe
4. Rostscheibe
5. Glutbett
6. Lufteinbringung
7. Oxidationszone
8. Reduktionszone
9. Leitung
10. Gaskühler
11. Leitung
12. Filter
13.Ausgang
14. Leitung
15. Verdichter
16.
17. Antriebswelle
18.Turbine
19. Pfeilrichtung
20. Abgas
21. Gasmischer
22. Gehäuse (von 21)
23. Düsenrohr
24. Gasstrom
25. Verdichterrad
26. Gas-Luftgemisch
27. Pfeilrichtung
28. Ausgangsrohr
29. Zylindereinlass
30.Abgaskrümmer
31.Abgas
32. Leitung
33. Einlass (von 18)
34. Verbrennungsmotor
35. Antriebswelle (von 36)
36. Generator
37. Stromausgang
38. Verdichtergehäuse
39. Kern (massiv)
40. Düsenmündung (von 23)
41. Luftstrom
42. Ringraum
43. Mischraum
44.Verdichterschaufel (von 25)
45. Leitschaufel (optional)
46. Gaseinlass
47. Kurbelgehäuse-Entlüftung
48. Verdichtermutter
49.Auslassspalt
50. Außenbereich (von 25)
51. Einlassbereich
52. Schaufeloberkante (von 44)
53. Partikel
54. Umhüllung
55. Pfeilrichtung
56.""
57.""
58. Einlass (für Luftstrom 41)
59. Drehrichtung
60. BHKW

## Patentansprüche

1. Vorrichtung zur Erzeugung eines brennbaren Gasgemisches aus einem kohlenstoffhaltigen Ausgangsstoff, insbesondere aus stückigem Holz, mit einem Reaktor (2), wobei der Reaktor (2) wenigstens eine Oxidationszone (7) zur Oxidation des Ausgangsstoffes und eine Reduktionszone (8) zur Reduktion wenigstens eines Zwischenprodukts der Oxidation umfasst, wobei ein Verdichter (15) für die Aufladung eines Verbrennungsmotors (34) als Teil eines BHKW (60) und mit einem Gasmischer (21), wobei der Verdichter (15) mindestens ein in einem Gehäuse (38) drehbar angetriebenes Verdichterrad (25) aufweist, wobei dem Verdichterrad (25) ein Mischer vorgeschaltet ist welcher über einen ersten Einlass (58) einen Luftstrom (41) aus der Atmosphäre und über einen zweiten Einlass (46) einen Gasstrom (24) aus dem Gaserzeuger (2) ansaugt, wobei zur Zentrierung des Gasstroms (24) auf den Mittenbereich des Verdichterrades (25) der Gasstrom von dem Luftstrom (41) etwa schlauchförmig umhüllt ist.

2. Gasmischer (21) zur Einleitung eines mit Partikeln und Teer belasteten Gasstroms (24) in einen Verdichter (15), **dadurch gekennzeichnet, dass** der Gasmischer (21) an den Einlassbereich (51) des Verdichters (15) luftschlüssig anschliesst, dass koaxial im Gehäuse(22) des Gasmischers (21) ein Düsenrohr (23) angeordnet ist, dessen Außenumfang mit dem Innenumfang des Gehäuses (22) einen Ringraum (42) bildet, über den ein aus der Atmosphäre angesaugter Luftstrom (41) zuführbar ist, und dass im Innenraum des Düsenrohrs (23) der partikel- und teerbehaftete Gasstrom (24) über eine am Düsenrohr (23) vorderseitig angeordneten Düsenmündung (40) gegen den Mittenbereich (48) des Verdichterrades (25) gerichtet ist.

3. Gasmischer nach Anspruch 1 oder 2, **dadurch gekennzeichnet, dass** der Gasstrom (24) von dem am Außenumfang des Gasstromes (24) geführten Luftstrom (41) schlauchförmig umhüllt ist und durch diesen auf die Drehachse des Verdichterrades (25) zentrierbar ist.

4. Gasmischer nach einem der Ansprüche 1 bis 3, **dadurch gekennzeichnet, dass** im Bereich des äußeren Ringraumes (42) des Gasmischers (21), in dem der Luftstrom (41) in Richtung zur Düsenmündung (40) des Gasmischers (21) geführt ist, noch zusätzliche Leitschaufeln (45) angebracht sind.

5. Gasmischer nach einem der Ansprüche 1 bis 4, **dadurch gekennzeichnet, dass** am Innenumfang des Düsenrohrs (23) Leitschaufeln zur Führung des Gasstroms (24) angeordnet sind.

6. Gasmischer nach einem der Ansprüche 1 bis 5, **dadurch gekennzeichnet, dass** der kurz vor der Düsenmündung (40) befindliche Abschnitt des Düsenrohrs (23) zylindrisch ausgebildet ist.

7. Gasmischer nach einem der Ansprüche 1 bis 5, **dadurch gekennzeichnet, dass** der kurz vor der Düsenmündung (40) befindliche Abschnitt des Düsenrohrs (23) konusförmig verengt ausgebildet ist.

8. Block-Heiz-Kraft-Werk (60) bestehend aus einem Gaserzeuger (2) zur Verbrennung von kohlenstoffhaltigem, stückigem Gut zur Erzeugung eines Holzgases, einem nachgeschalteten Gaskühler (10) und einem Filter (12), an dessen Ausgang (13) das Holzgas als partikel- und teerhaltiger Gasstrom (24) einem Gasmischer (21) zuführbar ist, der unter Beimischung eines aus der Atmosphäre angesaugten Luftstroms (41) einen hieraus gebildeten Mischstrom einem Verdichter (15) zuführt, der von einer abgas-betriebenen Turbine (18) angetrieben ist und das vom Verdichter (15) verdichtete Gas-Luftgemisch (26) in das Ansaugrohr (28) einer Verbrennungsmaschine (34) einleitbar ist, die einen elektrischen Generator (36) antreibt.

9. Verdichter (15) mit einem Gasmischer (21) zum Betrieb eines BHKW (60) **dadurch gekennzeichnet, dass** der Verdichter (15) als ein- oder mehrstufiger Radialverdichter ausgebildet ist.

10. Verdichter (15) mit einem Gasmischer (21) zum Betrieb eines BHKW (60) **dadurch gekennzeichnet, dass** der Verdichter als Schraubenkompressor oder als Axialverdichter oder als Kolbenverdichter oder als Lamellenverdichter ausgebildet ist.
